**Europäisches Patentamt**

**European Patent Office**

**Office européen des brevets**

(19)

(11) Veröffentlichungsnummer : **0 613 070 A2**

(12) **EUROPÄISCHE PATENTANMELDUNG**

(21) Anmeldenummer : **94102813.6**

(22) Anmeldetag : **24.02.94**

(51) Int. Cl.⁵ : **G05D 23/19**

(30) Priorität : **25.02.93 DE 4305870**

(43) Veröffentlichungstag der Anmeldung :
**31.08.94 Patentblatt 94/35**

(84) Benannte Vertragsstaaten :
**AT BE CH DE DK FR GB IT LI LU NL SE**

(71) Anmelder : **SANDLER ENERGIETECHNIK
GMBH & CO KG
Ölmühlhang 17
D-87600 Kaufbeuren (DE)**

(72) Erfinder : **Sandler, Martin
Oelmühlhang 17
D-87600 Kaufbeuren (DE)**
Erfinder : **Reckziegel, Martin
Neissegasse 26
D-87600 Kaufbeuren (DE)**

(74) Vertreter : **Leonhard, Frank Reimund,
Dipl.-Ing. et al
Leonhard - Olgemöller - Fricke
Patentanwälte
Josephspitalstrasse 7
D-80331 München (DE)**

(54) **Brauchwasser-Temperaturregelung mit neuronalem Netz.**

(57)    Das technische Gebiet der Erfindung ist die Brauchwasser-Temperaturregelung, und zwar zum Aufrechterhalten einer bestimmten - auch vorgebbaren - Temperatur eines sekundärseitigen Brauchwassers, das über einen Wärmetauscher aus einem Primärkreislauf erwärmt wird. Zur Verbesserung der Regelgenauigkeit und zur Vermeidung erhöhter Regelabweichungen wird ein neuronales Netz (30 ; 40) eingesetzt, das über eine Stellgröße die im Primärkreislauf angeordnete Förderpumpe (9) in ihrer Förderleistung steuert. Das neuronale Netz weist zwei Neuronen-Ebenen (40a, 40b) auf, davon eine Eingabeebene (40a) und eine Ausgabeebene (40b). Der Eingabeebene werden die Solltemperatur ($\vartheta_S$) und die Differenz $\Delta\vartheta$ aus Solltemperatur $\vartheta_S$ und Isttemperatur $\vartheta_{25}$ des primärseitigen in den Wärmeeintauscher eintretenden Wassers zugeführt. Jedes der Neuronen ist Träger einer Funktion ($P_{i,j}$). Jede dieser Funktionen legt eine Leistung P über einen Durchfluß $\Phi$ fest, der mit einem Meßgeber (19) in dem Primärkreislauf erfaßt wird. Eine Veränderung des Durchflusses bewirkt so unmittelbar anhand der vorgegebenen Funktion $P_{i,j}$ eine Veränderung der Primärleistung der Primärkreislauf-Förderpumpe (9) um die sekundärseitige Brauchwassertemperatur ($\vartheta_{18}$) schnellstmöglich auf einen vorgegebenen Wert zu bringen und ihn dort - gerade bei sprunghaft veränderndem Brauchwasserfluß - auch langfristig konstant zu halten.

Figur 2

EP 0 613 070 A2

Die Erfindung bezieht sich auf ein Verfahren zum Aufrechterhalten einer vorgebbaren Temperatur von Brauchwasser in einer Heizungsanlage. Eine weitere Erfindung bezieht sich auf ein Lernverfahren für das vorgenannte Verfahren zur Aufrechterhaltung der Brauchwasser-Temperatur.

Brauchwasser ist dasjenige Nutzwasser, das den Wasserhähnen in Hauhalten als Warmwasser zum Baden, Waschen, etc. entnommen wird. Es wird oft direkt im Heizkessel erwärmt, es kann auch über einen Wärmetauscher aufgewärmt werden. Ein solcher Wärmetauscher hat einen Primärkreislauf, der dem Heizkessel entspringt und einen Sekundärkreislauf, in dem das Brauchwasser fließt. Gespeist wird der Sekundärkreislauf aus einer Frischwasserquelle, die kaltes Wasser an den Wärmetauscher abgibt. Gespeist werden kann der Wärmetauscher aber auch aus einer Ringleitung, in dem erwärmtes Brauchwasser zirkuliert, was mittels einer Förderpumpe erreicht wird. Ausgehend von der Ringleitung werden die Zuführungen zu den Zapfstellen - den Warmwasserhähnen - verlegt. Nur das den Zapfstellen entnommene Wasser wird dann aus der Frischwasserleitung ergänzt.

Auch der Primärkreislauf eines solchen Wärmetauschers hat eine Förderpumpe. Mit ihr wird der Primär-Kreislauf mit seinem Wärmefördermedium - meist Wasser - in Bewegung gehalten. Im Stand der Technik ist es üblich, solche thermischen Regelstrecken mit PI- oder PID-Reglern zu regeln. Ein Differenzsignal - die Abweichung der Regelgröße von der Sollgröße - wird dem Regler zugeführt, der über eine Stellgröße - die Pumpenleistung, die Primärtemperatur oder die Fördermenge - einen Ausgleichsvorgang in der Brauchwasser-Regelstrecke auslöst. Ziel dieses Ausgleichs- oder Übergangsvorganges ist es, eine konstante Temperatur des Brauchwassers hinter dem Wärmetauscher zu erhalten. Diese Temperatur kann auch vorgebbar sein. Sie bildet die Regelgröße. Manko solcher herkömmlicher Regler ist es, daß zunächst die Regelgröße von der Solltemperatur - dem Sollwert - **abweichen muß,** bevor der Regler eingreift. Da die thermischen Regelstrecken sehr träge sind, kann der Ausgleichsvorgang, danach einige Zeit in Anspruch nehmen.

**Aufgabe der Erfindung** ist es daher, die Veränderung der Regelgröße in einem Brauchwasser-Erwärmungssystem so gering wie möglich zu halten; dabei liegt ein besonderes Augenmerk der Erfindung auf der Kompensation der Durchflußänderung des Brauchwassers. Diese - in der Regelungstechnik als Störgröße bezeichnete Einflußgröße - hat es maßgeblich in der Hand, die unerwünschten Temperaturveränderungen im Brauchwasser zu verursachen.

**Gelöst** wird die vorstehende Aufgabe mit einem Verfahren zur Aufrechterhaltung einer bestimmten - auch vorgebbaren - Temperatur von (sekundärseitigem) Brauchwasser, das über einen Wärmetauscher aus einem Primärkreislauf erwärmt wird und eine Förderpumpe sowie ein neuronales Netzwerk zur Steuerung dieser Förderpumpe aufweist. Von dem neuronalen Netzwerk, das zwei Neuronen-Ebenen hat, wird die Förderpumpe in ihrer Förderleistung gesteuert. Die zwei Neuronen-Ebenen des neuronalen Netzes sind dabei eine Eingabeebene und eine Ausgabeebene.

Maßgebender Vorteil dieser technischen Lehre ist es, daß das neuronale Netzwerk den Wechsel in der gezapften Brauchwassermenge - die Durchflußänderung des Brauchwassers - so schnell als möglich kompensiert, indem die Pumpenleistung angepaßt wird, ohne daß die (sekundärseitige) Brauchwassertemperatur merklich von der Solltemperatur abweicht. Entgegen den üblichen Reglern ist also nicht zuerst eine Temperaturabweichung erfoderlich, um einen Ausgleichsvorgang - hier die Veränderung der Pumpenleistung - auszulösen. Das neuronale Netz ist in der Lage, diese Leistungsveränderung der Primär-Pumpe bereits dann in zutreffendem Ausmaß durchzuführen, **bevor** die Temperatur des gezapften Brauchwassers sich verändert.

Das mit seinen wesentlichen Merkmalen im Anspruch 1 erfaßte Verfahren zum Aufrechterhalten der erwähnten Brauchwassertemperatur konkretisiert sich in den Ansprüchen 2 bis 14. In der Eingabeebene werden Neuronen vorgesehen, denen die Solltemperatur $\vartheta_S$ bzw. die Temperatur-Differenz $\Delta\vartheta$ aus der Wassertemperatur $\vartheta_{25}$ primärseitig am Wärmetauscher und dieser Solltemperatur zugeführt werden (Anspruch 2, 3, 4). Die Eingabeebene des neuronalen Netzes wird besonders einfach, wenn sie nur diese beiden Neuronen aufweist (Anspruch 5). Regelgröße ist dabei die Temperatur des sekundärseitig entnommenen Brauchwassers $\vartheta_{18}$. Im stationären eingeschwungenen Zustand entspricht die Solltemperatur der Temperatur des gezapften Brauchwassers ($\vartheta_S = \vartheta_{18}$). Bei einem mit seinen Parametern auf die Regelstrecke abgestimmten neuronalen Netz wird aufgrund der schnellen Reaktion dieses Netzes auf Veränderungen in der gezapften Brauchwassermenge diese Regelgenauigkeit garantiert. Nur wenn sich Änderungen in der Regelstrecke ergeben (Förderpumpenverhalten, Verschleiß, Alterung, unterschiedliche Frischwassertemperatur, Veränderung des Drucks der Frischwassertemperatur, zusätzliche Wärmequellen, Veränderungen in der Kesseltemperatur) kann die Übereinstimmung von Solltemperatur $\vartheta_S$ und Brauchwasser-Isttemperatur $\vartheta_{18}$ kurzfristig gestört werden. Dies aber nur solange, bis sich das neuronale Netz mit einem selbständigen Lernverfahren (Anspruch 15) auf die neue Regelstrecke eingestellt hat, um dann wieder eine Überstimmnung von Sollwert und Istwert zu garantieren, und zwar unabhängig von der gezapften Brauchwassermenge $\Phi$.

Damit sich das neuronale Netz auf eine solche Veränderung der Regelstrecke - oder der Einflußgrößen auf diese Regelstrecke - einstellen kann, wird das Lernverfahren vorgeschlagen, das Einstellen und Nachführen der Neuronal-Parameter (der Parameter des neuronalen Netzes in seinen Neuronen) ermöglicht (Anspruch 15). Mit ihm wird es - im Sinne der vorgenannten Problemstellung - um so vorteilhafter möglich sein, die Veränderung der Pumpenleistung - die das neuronale Netz veranlaßt - in ihrem Ausmaß so abzustimmen, daß damit eine Übereinstimmung von Soll- und Istwert, der Brauchwassertemperatur erreicht wird, besonders hinsichtlich der Störgröße "Zapfmenge". Sind die Parameter des neuronalen Netzes verstimmt, paßt die Stellgrößenänderung - die Änderung der Pumpenleistung - nicht zu der Regelstrecke; es können sich unerwünschte Oszillationen oder Ungenauigkeiten in der Brauchwasser-Zapftemperatur $\vartheta_{18}$ ergeben. Dies vermeidet das **Lernverfahren,** das im Betrieb des Verfahrens zum Aufrechterhalten einer bestimmten Brauchwassertemperatur (Anspruch 1) die in dem vorgesehenen neuronalen Netz erforderlichen Parameter den Änderungen der Regelstrecke (Primärkreislauf, Wärmetauscher, Sekundärkreislauf) anpaßt, also nachführt. Aber nicht nur die Nachführung der sich im Betrieb veränderten Parameter ist Ziel des Lernverfahrens, auch die **erstmalige Einstellung** der Parameter auf eine Regelstrecke, die dem neuronalen Netz noch nicht bekannt ist, kann mit dem Lernverfahren erfolgen. Dabei werden - als wesentliches Kriterium - die Netzabstände der Neuronen $N_{i,j}$ in dem neuronalen Netz verringert; sie rücken zeitdiskret zusammen, wobei die Differenz zwischen den einzelnen Neuronen - den Gitterpunkten des neuronalen Netzes - in der Ausgabeebene reduziert wird. In dieser Ebene bestimmen die Parameter der zusammenrückenden Neuronen die Pumpenleistung P der Förderpumpe im Brauchwasser-Primärkreislauf. Das Zusammenrücken der Neuronen $N_{i,j}$ bewirkt eine genauere Anpassung des neuronalen Netzes an einen gegebenen Betriebzustand und ermöglicht so feinfühlig das Ändern der Pumpenleistung im Primärkreislauf. Diese Pumpenleistung ergibt sich aus den in den Neuronen $N_{i,j}$ gespeicherten Funktionen oder Funktionsabschnitten $P_{i,j}$, und zwar als Funktion der Brauchwasser-Zapfmenge $\Phi$ (der "Störgröße").

Die Eingabeebene des neuronalen Netzes kann die Identitätsfünktion sein (Anspruch 6). Bei der Auswahl, welches Neuron der Ausgabeebene mit seiner gespeicherten Funktion - oder dem Funktionsabschnitt - die Pumpenleistung abhängig von der Zapfmenge $\Phi$ bestimmen darf, gibt es zwei Möglichkeiten. Zum einen die neuronenindividuelle Lösung, bei der ein Erregerzentrum nur ein individuelles Neuron $N_{i,j}$ sein kann (Ansprüche 8 und 9). Das Erregerzentrum liegt dann auf demjenigen Neuron, das den Eingangswerten der Eingangsgröße "am ehesten entspricht". Die Alternative hierzu ist es, ein Erregerzentrum zuzulassen, das zwischen den Neuronen liegt und damit jede mögliche Lage in dem **Zwischenbereich** zwischen den Neuronen-Gitterpunkten des neuronalen Netzes haben kann (Ansprüche 10 bis 12).

Die Abhängigkeit der Pumpenleistung P von der Brauchwasser-Zapfmenge $\Phi$ war bereits erwähnt; sie folgt aus **einer** Funktion oder einem Funktionsabschnitt, der in jedem Neuron des neuronalen Netzes gespeichert ist; wobei dieses Neuron - wenn es in der neuronenindividuellen Variante Erregerzentrum wird - seine Funktion oder **seinen** Funktionsabschnitt zur Bestimmung der Pumpenleistung zur Verfügung stellt (Anspruch 9). Liegt das Erregerzentrum in einem Bereich zwischen vier Eckpunkt-Neuronen im neuronalen Netz (Anspruch 10, 11), so wird sich die Abhängigkeit der Pumpenleistung von der Brauchwasser-Zapfmenge aus den gespeicherten Funktionen **jedes** dieser vier Eckpunkt-Neuronen bestimmen. Das ergibt eine Steuer-Fläche (Anspruch 11), deren Eigenschaft in demjenigen Neuron gespeichert werden kann, dessen Netzkoordinaten gegenüber den anderen drei Eckpunkt-Neuronen am geringsten sind (Anspruch 12).

Die Funktion oder deren Abschnitt kann mit Stützstellen, auch mehreren, in jedem Neuron festgelegt sein (Anspruch 13). Die Funktion kann eine Parabel oder ein Parabelabschnitt sein (Anspruch 14).

Das Verständnis der Erfindung soll anhand von Ausführungs **beispielen** näher erläutert werden.

**Figur 1** zeigt das Umfeld eines Regelgerätes 30, das ein neuronalen Netz 40 enthält, wobei das Umfeld einen Kessel oder Wärmespeicher 1, einen Primärkreislauf 8 mit einer Förderpumpe 9 und einen Wärmetauscher 7 aufweist. Ein Sekundärkreislauf 16 führt zu den Brauchwasser-Zapfstellen 17a, 17b, 17c und weist auch eine Zirkulationspumpe 21 sowie eine Temperaturmeßstelle 18 und einen Flügelradzähler 19 als Durchflußmeßgeber zur Erfassung der gezapften Brauchwassermenge auf (Fluß $\Phi$ oder Menge $\Delta V$).

**Figur 2** ist ein schematisches Bild des Netzes 40, mit einer Eingabeebene 40a und eine Ausgabeebene 40b. Einer der im Netz angeordneten Neuronen $N_{i,j}$ ist mit seinen Parametern - Gewichtsvektor und Ausgangvektor - vergrößert herausgezeichnet; und zwar $N_{7,1}$, wobei x=i=7 und y=j=1 ist.

**Figur 3** stellt den Fall eines Erregerzentrum dar, der im Zwischenbereich zwischen vier Eckpunkt-Neuronen liegt. Jeder Gitterpunkt des hier dargestellten Netzes entspricht einem Neuron der Ausgabeebene 40b der Figur 2. Die Indizes geben die Gitterpositionen an.

**Figur 4** zeigt das neuronale Netz mit seinen Gitterpunkten für einen bestimmten Temperaturbereich des Sollwertes von 30°C bis 60°C (in x-Richtung). Auf der dazu Orthogonalen ist die Differenz aus primärseitiger Wassertemperatur $\vartheta_{25}$ des Wärmetauschers 7 und Temperatur-Sollwert $\vartheta_S$ (in y-Richtung) aufgetragen. Das Netz ist dabei initialisiert, also hier beispielhaft mit äquidistanten Gitterpunkten - sprich:

Neuronen - versehen. Sowohl die Gitterpunkt-Abstände als auch die Amplituden können sich im Betrieb - gemäß den folgenden Figuren - verändern.

**Figur 4a** zeigt die Neuronen-Verteilung in der XY-Ebene nach fünf Lernschritten. Dabei befindet sich das Erregerzentrum bei $\vartheta_S$=50°C und $\Delta\vartheta$=5°C.

**Figur 5 und 5a** zeigen Stützpunkte im Neuronengitter für die Funktion $P_{i,j}$=f($\Phi$) und zwar für die Zapfmenge 10 Impulse/sec, was eine der mehreren Stützstellen der beispielhaften Parabel als Funktion $P_{i,j}$ ist. Die beiden Figuren zeigen dieselbe z-Auslenkung aus verschiedenen Blickrichtungen. Der Verlauf der gezeigten "Fläche" ist derjenige, den das neuronale Netz nach einem Einschalten (Initialisieren) aufweist.

**Figur 6 und Figur 6a** zeigen den Verlauf der Stützstellen für 10 Impulse/sec nach 10 Lernschritten. Als Erregerzentrum I (E I) wird das von Figur 4 gezeigt (50°C/5°C).

**Figur 7 und Figur 7a** zeigen das den Figuren 5, 5a, vergleichbare Initialisierungsbild je einer Stützstelle an jedem Neuronen-Gitterpunkt, jedoch hier für die Brauchwasser-Zapfmenge 30 Impulse/sec.

**Figur 8 und 8a** veranschaulicht die Veränderung der initialisierten Werte von Figur 7, 7a, nach 10 Lernschritten. Erregerzentrum ist nach wie vor dasjenige der Figur 4, die Meßwerte (der Stützstellen) werden für die Brauchwasserzapfmenge von 30 Impulsen/sec gezeigt.

**Figur 9 und 9a** entsprechen der Figur 7, 7a, jedoch für eine Brauchwasserzapfmenge von 60 Impulsen/sec. Auch hier ist die voreingestellte Fläche zu sehen, die sich aus jeweils einer Stützstelle der beispielhaften Parabel ergibt. Die Parabel ist jeweils für ein Neuron über eine Mehrzahl von gespeicherten Stützstellen festgelegt.

**Figur 10 und 10a** zeigen die entsprechenden Änderungen der Figuren 9, 9a nach 10 Lernschritten. Das Erregerzentrum liegt an derselben Stelle, wie für die Figuren 4a, 6, 6a und 8, 8a. Eine Zusammenschau der Figuren 5, 7 und 9 würde demgemäß in jedem Neuron die hier initialisierten beispielhaften drei Stützstellen zeigen, die die Funktion $\Phi$ zur Steuerung der Förderpumpe 9 festlegen. Entsprechend zeigen die Figuren 6, 8, 10 den StützstellenVerlauf nach 10 Lernschritten für das gesamte Netz.

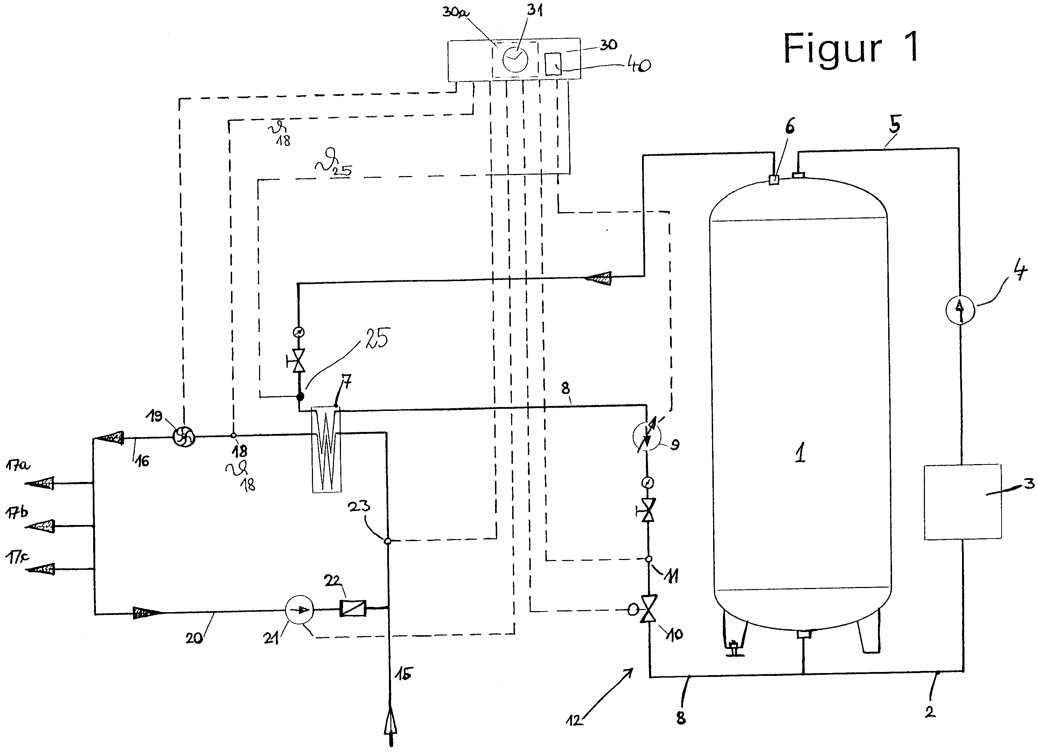

**Figur 1** veranschaulicht den Primärkreislauf 8 und den Sekundärkreislauf 16. Beide Kreisläufe weisen Pumpen 9, 21 auf, thermisch verbunden sind sie über einen Wärmetauscher 7. Schematisch dargestellt ist ein Wärmespeicher oder Kessel 1, der den Primärkreislauf mit warmem Wasser speist. Eine Temperatur-Meßstelle (ein Temperaturfühler) ist - in Flußrichtung des Primärkreislaufes - vor dem Wärmetauscher 7 angeordnet. Er erfaßt die Temperatur $\vartheta_{25}$ und führt sie zum Regelgerät 30, das ein neuronales Netz 40 zur Steuerung der Brauchwasser-Zapftemperatur aufweist. Diese wird über einen Meßfühler 18 erfaßt. Die Zapfmenge des Brauchwassers erfaßt ein Flügelradzähler 19, dessen Impulse pro Zeiteinheit die Durchflußmenge $\Phi$ ergibt. Die Temperatur $\vartheta_{18}$ der Meßstelle 18 gilt es auf einem konstanten Pegel zu halten. Dieser Pegel kann über Sollwertvariierung auch verändert werden, wird meist jedoch auf einem Wert zwischen 50°C und 60°C verbleiben.

Zuvor war von zwei Kreisläufen die Rede, dem Primärkreislauf und dem Sekundärkreislauf. Gezeichnet ist in Figur 1 sowohl der Primärkreislauf 8, als auch der Sekundärkreislauf 16. Der Sekundärkreislauf 16 läßt sich modifizieren, und zwar so, daß eine Brauchwasser-Zuflußleitung 16 zu den Zapfstellen 17a, 17b und 17c führt. Die Zirkulations-Rücklaufleitung 20 kann dann entfallen, ebenso wie die Zirkulationspumpe 21 und die Rückstromsperre 22. Die Frischwasser-Zufuhr 15 führt dann über den Wärmetauscher 7 über die Meßstellen 18, 19 (für Temperatur und Durchfluß) in die Rohrleitung 16 zu den Zapfstellen 17.

Wird ein Wärmespeicher 1 eingesetzt, so kann dieser von einer Mehrzahl von Wärmequellen gespeist werden (bspw. Solarkollektor 3, Wärmepumpe, Gasbrennwertkessel). Auch Erd- und Fernwärme können angeschlossen sein.

Stellgröße des Regelgerätes 30 mit seinem neuronalen Netz 40 ist die elektrische Leistung, die der Pumpe 9 im Primärkreislauf zugeführt wird. Mittels der Veränderung der Pumpenleistung kann die im Wärmetauscher 7 abgegebene Wärme an das sekundärseitige Brauchwasser verändert werden, um die Brauchwassertemperatur $\vartheta$18 - unabhängig von der Durchflußmenge 19 - auf einem konstanten Pegel zu halten.

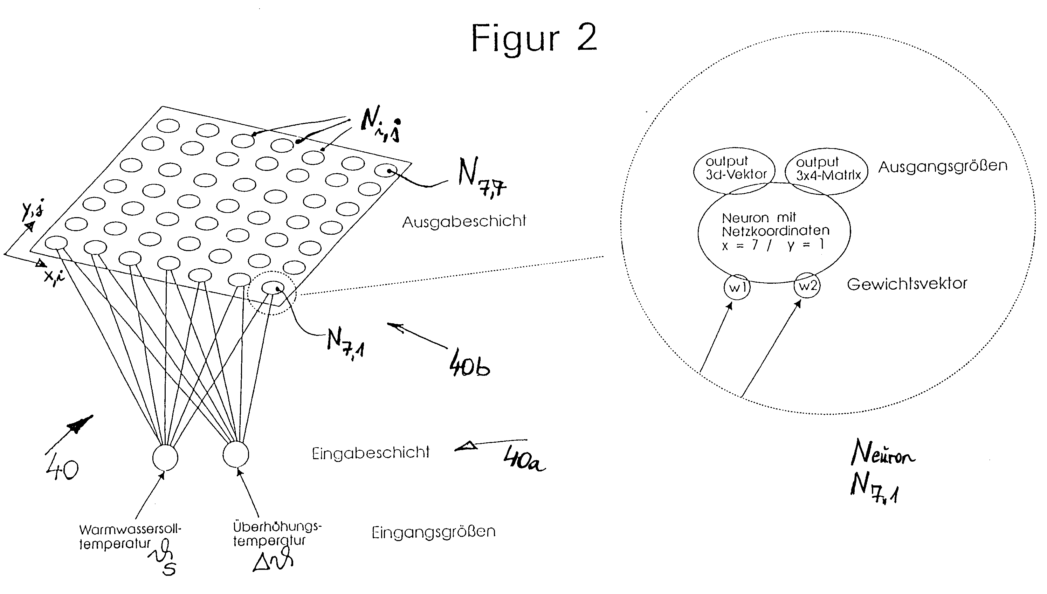

Eine Einsicht in das Regelgerät 30 eröffnet die **Figur 2** mit einer schematischen Skizze des neuronalen Netzes 40, das eine Eingabeebene 40a und eine Ausgabeebene 40b aufweist. In der Ausgabeebene sind eine Mehrzahl von Neuronen vorgesehen, die in einem gleichförmigen Gitter angeordnet sind. Jedes Neuron ist durch seine x- und y-Koordinate eindeutig beschrieben. Ein Neuron ist beispielhaft in dem rechten Halbbild der Figur 2 herausgezeichnet. Es ist in der Koordination-Terminologie das Neuron $N_{7,1}$. Angesteuert werden die Neuronen der Ausgabeebene 40b von zwei Neuronen der Eingabeebene 40a. Diese Neuronen werden mit der Solltemperatur $\vartheta_S$ und mit der Differenz $\Delta\vartheta$ aus Solltemperatur und primärseitiger Wärmetauscher-Temperatur ($\vartheta_{25}$-$\vartheta_S$ = $\Delta\vartheta$). Die von den Eingabe-Neuronen vermittelten Signale sind die Übergabewerte, mit ihnen wird für jeden Betriebszustand der Parameter $\vartheta_S$ und $\Delta\vartheta$ ein Neuron der Ausgabeebene ausgewählt. Dieses ausgewählte Neuron ist das Erregerzentrum, im folgenden Erregerzentrum I genannt, da es nur auf einzelnen individuellen Neuronen zu liegen kommen kann. Zeigen die Eingabewerte $\vartheta_S$, $\Delta\vartheta$ auf einen Zwischenbereich zwischen den Neuronen, so wird dasjenige Neuron ausgewählt, das am nächsten zu diesem alternativen Erregerzentrum (im folgenden: Erregerzentrum II) liegt.

Daraus ersichtlich ist bereits, daß zwei Varianten eingesetzt werden können, zum einen die neuronenindividuelle Variante, zum anderen die Zwischenbereichsvariante, in welcher auch die Zwischenräume Erregerzentren sein können.

Zur Konstanthaltung der sekundärseitigen Brauchwassertemperatur $\vartheta_{18}$ bedarf es der Berücksichtigung der erheblichen thermischen Verzögerungen und Totzeiten in der Regelstrecke. Vergleichsweise klein dagegen ist die elektrische Zeitkonstante, die die Pumpe 9 aufweist. Maßgeblich für die Trägheit der Regelstrecke wird also der Wärmetauscher 7 sein, da der Sekundär-Kreislauf eine Ringleitung 16, 20 aufweist, in der etwa gleichbleibende Temperatur an jedem Ort der Ringleitung herrscht, solange die Pumpe 21 kontinuierlich fördert. Neben den inhärenten Eigenschaften dieser Regelstrecke kommen Störgrößen hinzu. Die maßgebende Störgröße ist die - oft ruckartige - Veränderung der Brauchwasser-Zapfmenge, also derjenigen Menge, die über die Leitung 17a, 17b und 17c an die Verbraucherstellen geliefert werden. Eine weitere spürbare Störgröße bildet die Temperatur des Speichers 1, denn sie überträgt sich auf die Wassertemperatur im Primärkreislauf. Beide maßgeblichen Störgrößen gilt es zu eliminieren oder zumindest hinsichtlich ihrer Auswirkung rechtzeitig zu kompensieren; dabei muß die thermische Trägheit des Gesamtsystems jedoch berücksichtigt werden.

Hierfür ist der in Figur 2 dargestellte Neuronal-Regler 40 hervorragend geeignet. Die Eignung wird bekräftigt dadurch, daß das neuronale Netz lernfähig ist, also an Veränderungen der Regelstrecke adaptiert werden kann. Ausgangspunkt ist zunächst ein regelmäßiges Netz von Neuronen $N_{i,j}$ in der Ausgabeebene 40b von denen jedes eine Funktion speichert, die eine parabelförmige Abhängigkeit der Pumpenleistung (der elektrischen Stellgröße) der Primärpumpe 9, als abhängige Variable von dem Momentanwert der Brauchwasser-Zapfmenge definiert, die der Flügelradzähler 19 im Sekundär-Kreislauf erfaßt. Jedes Neuron ist für sich also Träger einer gesamten Steuerfunktion, die hier beispielhaft parabelförmige Gestalt hat. Die Wahl, welche der Steuerfunktionen - im Beispiel der Figur 2 welche der 49 Steuerfunktionen - herangezogen wird, um die elektrische Pumpenleistung der Primär-Förderpumpe 9 zu bestimmen, treffen die Eingangsgrößen $\vartheta_S$ und $\Delta\vartheta$. $\Delta\vartheta$ ist eine Temperaturdifferenz, $\vartheta_S$ ist der Sollwert der Sekundär-Wassertemperatur, die am Temperatursensor 18 gemessen werden "soll".

Jedes Neuron, das an einem Gitterpunkt des Netzes angeordnet ist, weist einen Wichtungsteil und einen Ausgabeteil auf. Diese Teile bezeichnet man oft auch als "Vektoren", da es sich um jeweils mehrere Zahlenwerte handelt. Dies vereinfacht die Schreibweise und die Terminologie.

(a) Der Wichtungsteil besteht aus zwei Komponenten, sprich: zwei Zahlenwerten. Jede Komponente ist dabei mit dem Ausgang eines Neurons der Eingabeschicht 40a verbunden; mit dem Wichtungsteil wird festgelegt, an welcher Stelle das Neuron sich im Netz befindet. Verändert man den Inhalt des **Wichtungsvektors** in seinen xy- oder i,j-Werten, so verändert man die Position dieses Neurons im Netz. Eine solche Veränderung wird von einem Lernverfahren durchgeführt, während man nach dem Einschalten - dem Initialisieren - ein gleichmäßiges Netz erhält. Beim Auswählen eines Neurons der Ausgabeebene 40b werden die Übergabewerte der Eingabeebene 40a verglichen mit den beiden Komponenten des Wichtungsvektors; die am ehesten zutreffenden Komponenten oder die genau passenden Komponenten bestimmen dann das Neuron, das für diesen Betriebszustand ausgewählt wird.

(b) Ist ein Neuron im Wege des Wichtungsvektors ausgewählt worden, so bestimmt der **Ausgabevektor**, der im Beispiel ein dreidimensionaler Stützwert-Vektor ist, welche Pumpenleistung die Förderpumpe 9 haben soll. Dies ist die Stellgröße des Regelgerätes 30 mit dem neuronalen Netz 40. Dabei wird die oben erwähnte erste Variante gewählt, bei der nur ein Neuron für die Vorgabe der Pumpenleistung verantwortlich zeichnet; es ist das Neuron, dessen Wichtungsvektor am ehesten zu dem Übergabevektor - den von der Eingabeebene an die Ausgabeebene weitergereichten Werten - entspricht. Haben die Neuronen der Eingabeebene 40a als Übertragungsfunktion die Identitätsfunktion, so werden die System-Meßwerte $\vartheta_S$ und $\Delta\vartheta$ direkt verglichen mit dem Inhalt des Wichtungsvektors.

Wählt man die zweite Variante, bei der auch jeder Zwischenbereich zwischen den diskreten Neuronen $N_{i,j}$ im Gitternetz ein Erregerzentrum sein kann, so wird aus den Funktionen oder Funktionsabschnitten, die jedes der angrenzenden Gitterpunkt-Neuronen speichert, eine gewundene Fläche $F_{i,j}$ errechnet, die eine Bestimmung der Pumpenleistung auch für Erregerzentren im Gitter-Zwischenbereich erlaubt. Diese Fläche kann aufgrund der weniger häufigen Änderung der Funktionen in den Neuronen **in einem der Neuronen** gespeichert sein. Das oben unter (a) erwähnte Neuron, das für den Fall des neuronenindividuellen Erregerzentrums die Pumpenleistung bestimmte, kann hier die Definition der Fläche für den Zwischenbereich speichern. So kann jedem Neuron des Netzes ein bestimmter Bereich zugeordnet werden und die gesamte Fläche des Neuronennetzes wird abgedeckt. Es besteht dann keine Diskretisierung bei der Anwahl über den Wichtungsvektor mehr; die Diskretisierung besteht nur noch insoweit, als mit ihr ein Neuron ausgewählt wird, in dem die Definition des Flächenabschnittes gespeichert ist, auf dem - oder "in dem" - das Erregerzentrum liegt.

Zur Bestimmung des "am ehesten" passenden Neurons bei der neuronenindividuellen Lösung kann die euklidische Distanz zwischen dem Wichtungsvektor und dem Übergabevektor gebildet werden. Als optimal wird dann das Neuron $N_{i,j}$ angesehen, bei dem die euklidische Distanz am kleinsten ist. Dieses Neuron ist das Erregerzentrum.

Das soeben bestimmte Erregerzentrum hat für die zweite Variante, in der ein gesamter Bereich als Erregerzentrum zugelassen wird, nur mittelbar Bedeutung, denn mit ihr wird zunächst das Neuron ausgewählt, dessen gespeicherte gewundene Fläche herangezogen wird. Diese gewundene Fläche ist in einem Flächenvektor, festgeschrieben, der eine 3x4-Matrix sein kann. Sowohl der Flächenvektor als auch der Ausgabevektor bestimmen die Pumpenleistung P in Abhängigkeit von der gezapften Brauchwassermenge Φ. Letztere wird mit dem Flügelradzähler 19 erfaßt. Ersichtlich dabei ist, daß eine Veränderung der Zapfmenge des Brauchwassers - unmittelbar erkennbar durch eine Änderung der Impulszahl pro Zeiteinheit des Meßgebers 19 - sofort eine Veränderung der elektrischen Pumpenleistung und damit der geförderten Primär-Wassermenge im Primärkreislauf 8 veranlaßt. Einer Veränderung der Temperatur an der Temperaturmeßstelle 18 bedarf es hierzu nicht. Daraus kann ersehen werden, in welcher Weise das Neuronal-Netzwerk eine sofortige Reaktion erlaubt.

Verändert wird diese Reaktion zum einen dadurch, daß andere Neuronen ihre Flächenabschnitte oder Funktionen oder Funktionsabschnitte zur Verfügung stellen, um die Pumpenleistung P zu bestimmen. Verändert werden kann die Steuergröße zum anderen auch damit, daß die Flächenabschnitte die Funktionsabschnitte oder Funktionen der einzelnen Neuronen selbst angepaßt oder "adaptiert" werden.

Zur Speicherung der Funktionswerte, der Funktionsabschnitte, der Funktion oder der Flächenabschnitte können verschiedene Varianten eingesetzt werden. Die einfachste Lösung bietet sich, wenn einige Stützstellen eine bestimmte Funktion festlegen. Zwischen den Stützstellen kann dann linear, quadratisch oder kubisch interpoliert werden. Im gewählten Beispiel einer parabelförmigen Funktion - oder einer Parabel selbst - genügen drei Stützstellen, um diese Funktion festzulegen. Im Beispiel werden die Stützstellen bei 10 Impulsen/Sekunde, bei 30 Impulsen/Sekunde und bei 60 Impulsen/Sekunde gewählt; jede dieser Stützstellen entspricht einer bestimmten Durchflußmenge, die sich aus Strömungswiderstand und Impulszahl (Impulse/sec) ergibt. Ebenso kann auch ein Flächenabschnitt in der 3x4-Matrix geschrieben werden, sie kann mit einer Mehrzahl von Stützstellen angegeben werden, sie kann auch als analytische Funktion beschrieben werden, deren Randwerte in jedem Eckpunkt-Neuron durch die jeweilige Parabel bzw. den Parabelabschnitt definiert ist. Es ergibt sich eine gewundene Fläche $F_{i,j}$, deren Randbedingung festgelegt ist durch die vier Parabeln der vier Eckpunkte dieses Flächenabschnittes.

Analytisch festlegen läßt sich die gewundene Fläche - der Ausschnitt aus der gewundenen Fläche - über die Funktion

$$z = axy + bx + cy + d,$$

wobei

x die erste Gewichtskomponente des jeweiligen Neurons ist, hier die Solltemperatur $\vartheta_S$;

y die zweite Komponente des Gewichtsvektors ist, hier die Temperaturdifferenz $\Delta\vartheta$;

z die i-te Komponente des Ausgabevektors ist, hier die Förderpumpenleistung P.

Durch Einführen der Werte der vier Neuronen-Eckpunkte erhält man für jede Fläche ein lineares Gleichungssystem mit der vier Gleichungen - im Beispiel durch einen Gauss-Jordan-Algorithmus - gelöst werden. Man erhält dabei die Koeffizienten der drei Flächengleichungen. Setzt man die vorliegenden Komponenten des Eingabevektors in jede dieser Gleichungen ein, so erhält man drei Förderpumpenleistungen für die drei Stützpunkte der Brauchwasserzapfmenge. Mit diesen drei Stützpunkten wird nun wie beschrieben weitergearbeitet. Um die Flächen gemäß dem vorgeschriebenen Algorithmus nicht jedes Mal neu berechnen zu müssen, werden die Koeffizienten in der 3x4-Matrix zusammengefaßt und einem Neuron der vier Neuronen-Eckpunkte zugewiesen. Es kann dies das Neuron mit den kleinsten der vier Gewichtsfaktoren sein. Das würde in der ersten Lösungsvariante demjenigen Neuron entsprechen, das Erregerzentrum wird, weil es am ehesten den Übergabewerten der Eingabeebene 40a entspricht. Aus den gewundenen Flächenabschnitten entsteht so eine vollständige gewundene Fläche im gesamten xy-Bereich.

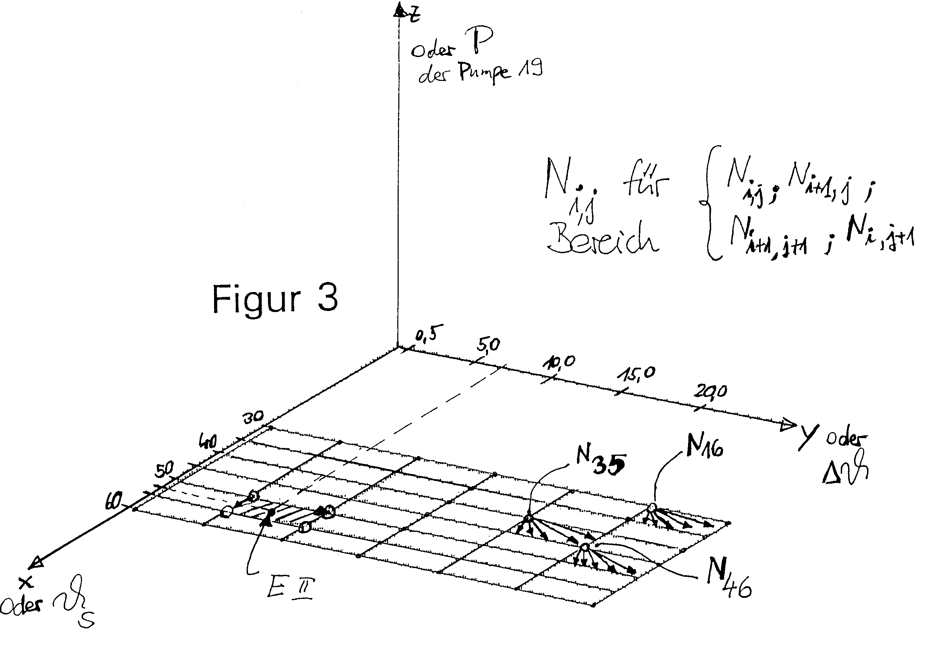

**Figur 3** veranschaulicht diesen XY-Bereich und hebt ein Erregerzentrum hervor. Dieses Erregerzentrum wird E II bezeichnet und liegt bei $\Delta\vartheta = 7.0°C/ \vartheta_S = 52°C$. Es liegt im Gitter-Zwischenbereich. Angedeutet sind auch die vier Eckpunkt-Neuronen, die zur Festlegung der gewundenen Fläche $F_{i,j}$ mit ihren Funktionen oder Funktionsabschnitten $P_{i,j}$ herangezogen werden. Dargestellt sind weiterhin drei exemplarische Neuronen $N_{35}$, $N_{16}$ und $N_{46}$, dabei jeweils durch Pfeile mit ihrem Einzugsbereich, der dem gewundenen Flächenabschnitt $F_{i,j}$ entspricht. Wird die Variante mit Erregerzentrum im Zwischenbereich (Erregerzentrum II) gewählt, so bestimmt das jeweils hervorgehobene exemplarische Neuron mit seiner 3x4-Matrix die gewundene Fläche. Wird die Variante gewählt, bei der nur ein Neuron selbst Erregerzentrum sein kann, so liegt der Geltungsbereich des Neurons ebenso. Dann wird zur Bestimmung der Pumpenleistung allerdings keine gewundene Fläche, sondern nur der Funktionsabschnitt oder die Funktion $P_{i,j}$ dieses Neurons herangezogen.

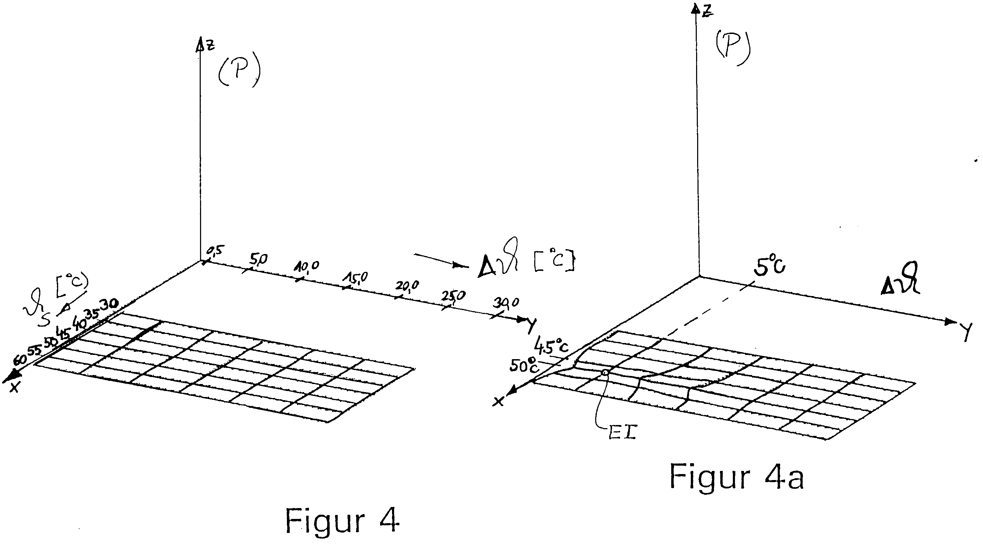

**Figur 4** zeigt die initialisierte gleichförmige Netzstruktur. **Figur 4a** zeigt dagegen bereits eine durch ein Lernverfahren veränderte Netzstruktur, bei der ein Erregerzentrum E I hervorgehoben ist, zu dem sich die Gitterpunkte hin konzentrieren. Die Konzentration der Gitterpunkte ist eine Kontraktion der Neuronen im Bereich des aktuellen Erregerzentrums. Das Erregerzentrum ist hier als $\vartheta_S=50°C$, $\Delta\vartheta=5°C$ festgelegt. Die Kontraktion findet in der XY-Ebene statt. Die z-Richtung ist als derjenige Parameter vorgesehen, der der Pumpenleistung entspricht. Eine Veränderung des Inhaltes eines Neurons entspricht einer Veränderung der Amplitude der einzelnen Stützstellen der gespeicherten Funktionen, also einer Änderung der z-Werte. Eine Veränderung der Position des jeweiligen Neurons entspricht einer Verschiebung in XY-Richtung, wobei der Wichtungsvektor jedes Neurons angepaßt wird.

Das Lernen erfolgt mittels der rekursiven Gleichung

$$w_j (t + 1) = w_j(t) + \varepsilon \cdot h_{jz} \cdot [x(t) - w_j(t)]$$

Der Vektor $w_j(t)$ ist der jeweils anzupassende Wertevektor, er kann der Wichtungsvektor oder der Ausgabevektor sein. $x(t)$ ist der Vorgabevektor zum Zeitpunkt t. Der Differenzvektor $[x(t)-w_j(t)]$ bildet einen **Verschiebungsvektor** der bei einer Addition zum Wertevektor diesen auf dem Vorgabevektor $x(t)$ abbildet. Der Wertevektor wird durch ihn zum Vorgabevektor verschoben. Die Konstante $\varepsilon$ bestimmt, in welchem Maß dies geschieht; sie wird Lernrate bezeichnet und liegt im Bereich zwischen 0 und 1. Die Funktion $h_{jz}$ gibt der Gleichung die Eigenschaft, daß ein Neuron $N_{i,j}$, das stärker am Erregungszentrum liegt, stärker beeinflußt wird, als ein Neuron, das davon weiter entfernt liegt. Die Verschiebung eines Wertevektors sollte daher im Erregungszentrum ein Maximum annehmen und mit zunehmender Distanz auf Null abklingen. Das Abklingen verläuft im Wege einer räumlichen Gauss'schen Glockenkurve. Eine Verschiebung der Neuronen erfolgt also nur innerhalb eines gewissen Radiusses, der in x- und y-Richtung auch unterschiedlich sein kann, womit es eine Elipse wäre. Der übrige Teil des Netzes verändert seine Gitter-Positionen nicht.

Die erwähnte Lernregel kann auch verändert werden, indem der Verschiebungsvektor $[x(t)-w_j(t)]$ durch einen Differenzvektor d(t) ersetzt wird. Dann werden die Wertevektoren $w_j$ den **Ausgabevektoren** entsprechen, also findet dann eine Anpassung der Amplitude z (sprich: der Pumpenleistungs-Funktionen) statt. Diese Adaption soll später erläutert werden; zunächst soll die Adaption der Neuronen-Positionen, also die Anpassung des **Wichtungsvektors** vertieft werden.

Ein regelmäßiges Netz bildet die **Figur** 4. Sie stellt den Zustand nach Einschalten des neuronalen Netzes 40 dar. Nach 5 Lernschritten erhält man eine Gitterstruktur gemäß der Figur 4a. Jeder Lernschritt wurde dabei nach dem Stabilisieren der Temperatur nach einem Wasserzapfen ausgeführt. Erkennbar verschiebt sich das Umfeld des Erregezentrums zum Erregerzentrum hin. Die Neuronen rücken dort zusammen. Das Netz verdichtet sich und erlaubt eine feinfühligere Reaktion auf Änderungen in der Brauchwasserzapfmenge. Die Zwischenräume, in denen - in der zweiten Variante - interpoliert werden muß, reduzieren sich und das Diskretisierungs-Raster - in der ersten Variante - reduziert sich ebenfalls.

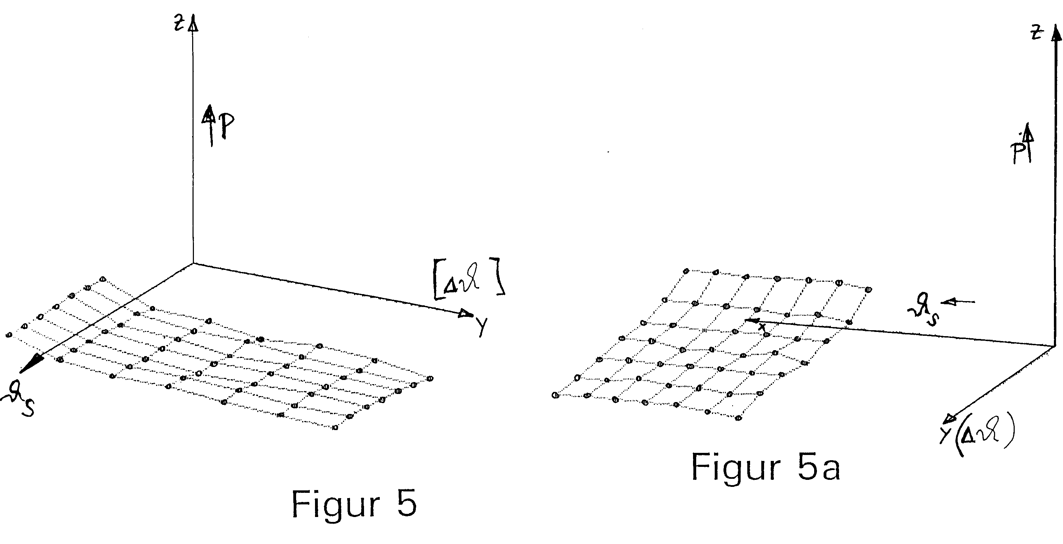

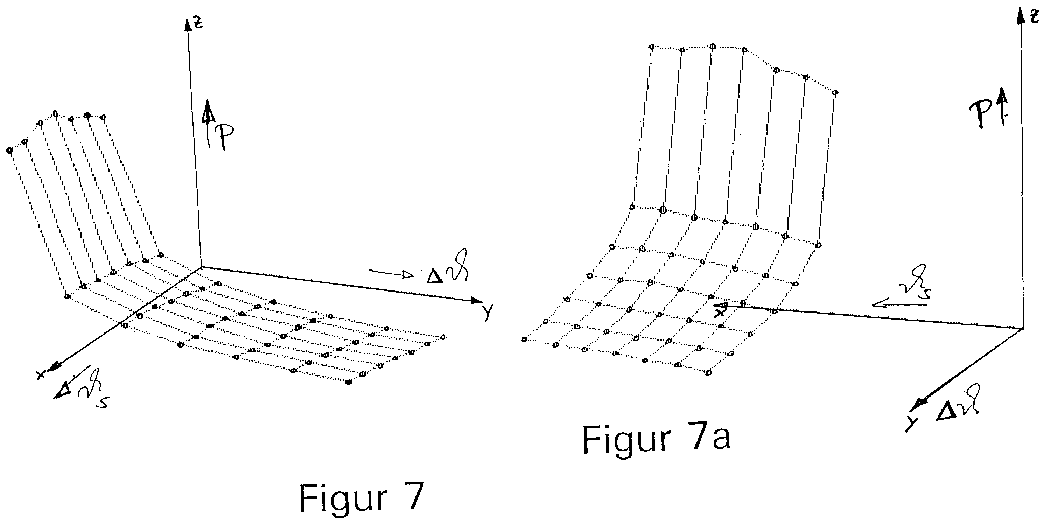

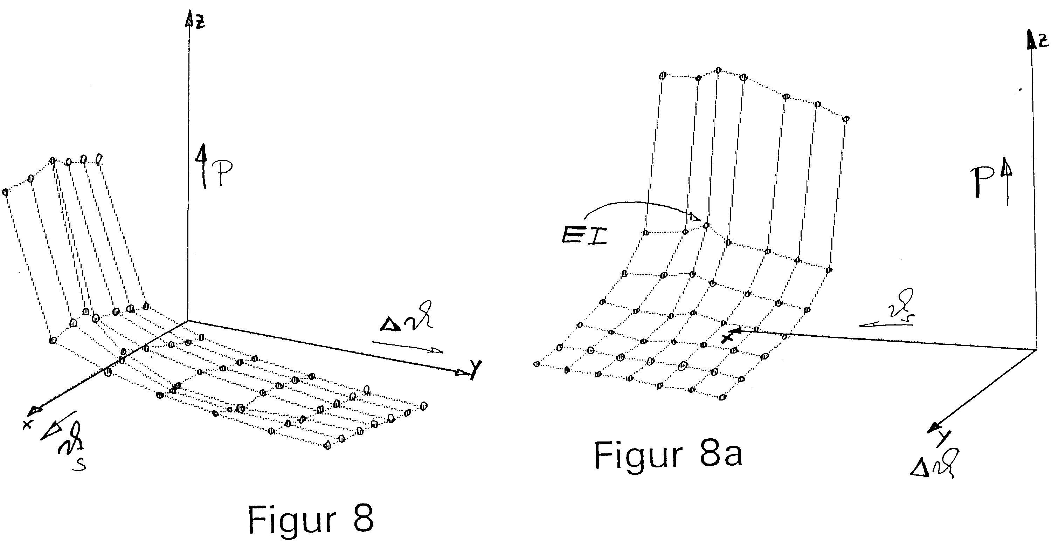

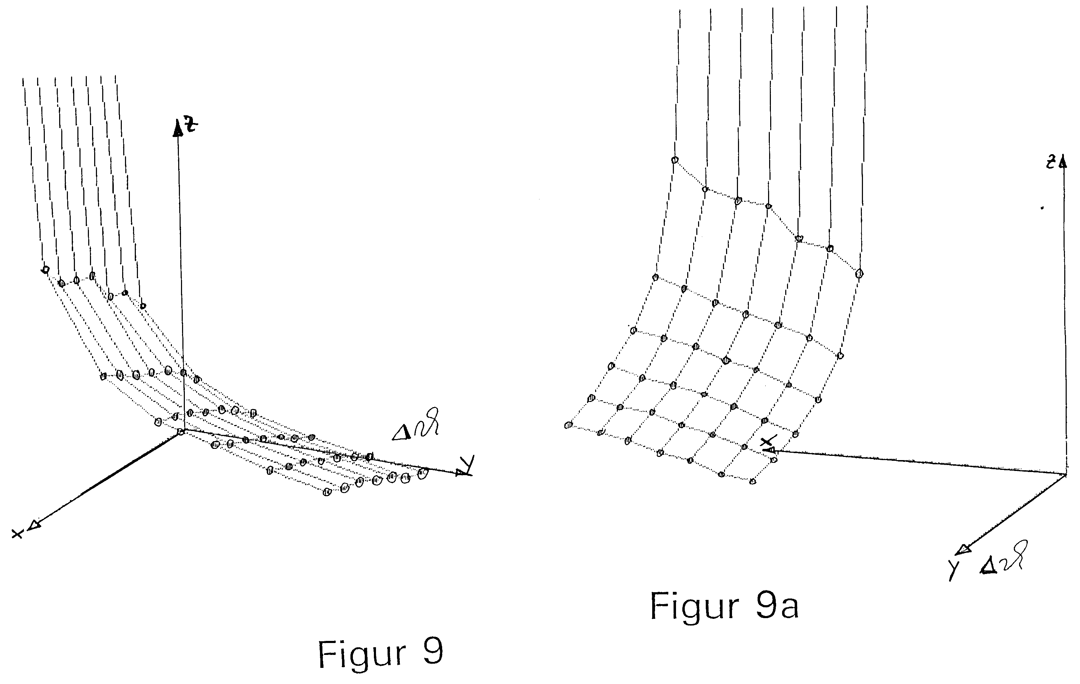

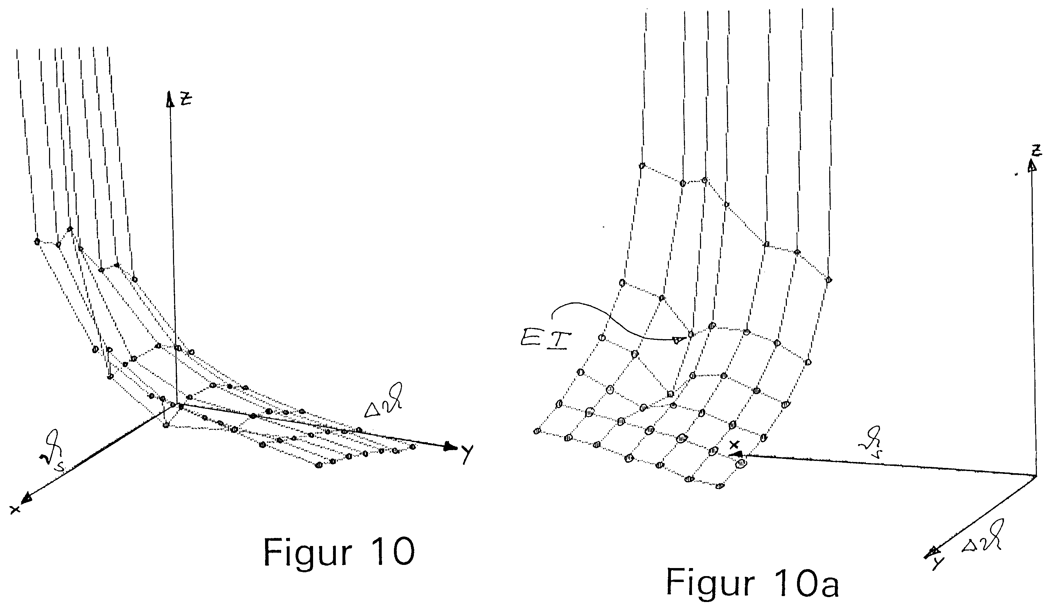

Die folgenden Bilder 5 bis 10 bzw. 5a bis 10a veranschaulichen die Adaption der Funktionen bzw. Funktionsabschnitte $P_{i,j}=f(\Phi)$. Diese Adaption beeinflußt die Ausgabevektoren der Neuronen in der Ausgabeebene 40b. Dies ist in den Figuren 5-10 bzw. 5a-10a jeweils in z-Richtung erläutert, wobei das Gitter mit seinen Neuronen nach wie vor Geltung hat. Die Auslenkung der einzelnen Gitterpunkte in z-Richtung entspricht der Stützstelle der Funktion $P_{i,j}$ für das jeweilige Neuron bei einem bestimmten Parameter des Durchflusses $\Phi$ des Brauchwassers. In dem Ausführungsbeispiel sind drei Stützstellen zur Festlegung einer Parabel vorgesehen, die Brauchwasser-Zapfmengen an diesen Stützstellen sind 10 Impulse/ sec., 30 Impulse/sec. und 60 Impulse/sec. Entsprechend den jeweiligen Strömungswiderstände errechnen sich die zugehörigen Durchflußmengen.

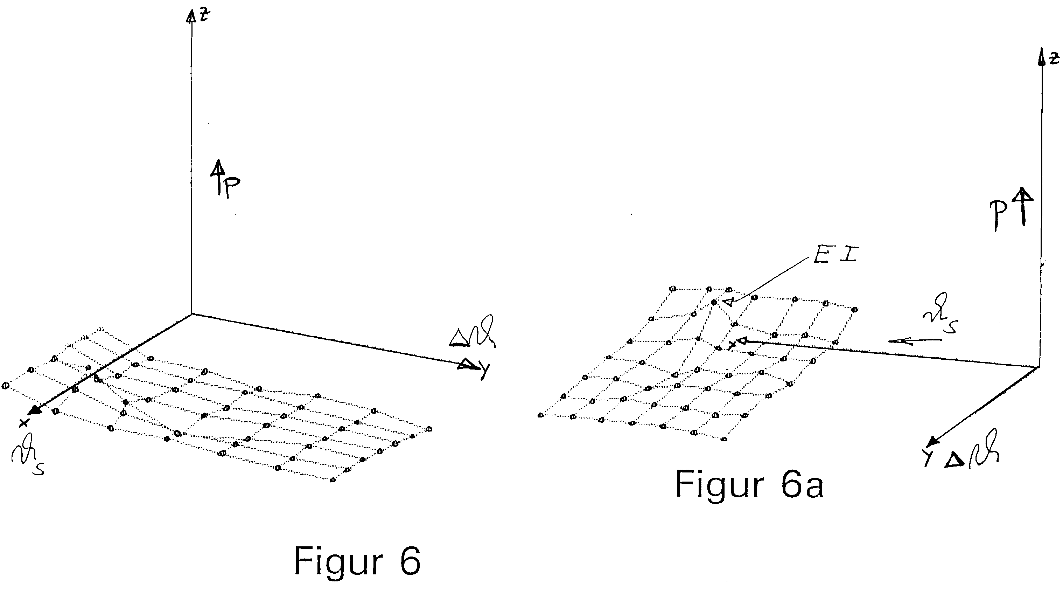

Die Figur 5 und die Figur 5a sind identisch, nur daß die xy-Ebene um 90° gedreht ist. Dies ermöglicht einen besseren Einblick in die Amplitude der jeweiligen Parabel-Stützstelle. Gleiches hat für die Figuren 6 bis 10 Geltung.

Während die Figuren 5 und 5a die Vorinitialisierung der ersten Stützstelle an den Neuronen-Gitterpunkten zeigen, zeigen die Figuren 6, 6a die Veränderung nach 10 Lernschritten. Deutlich zu erkennen ist das Erregerzentrum EI, das bei $\vartheta_S=50°C$ bzw. $\Delta\vartheta=5°C$ liegt. Der Beginn eines Lernschrittes orientiert sich an einem ersten registrierten Durchfluß des Flügelradzählers 19. Danach wird ein Zeitgeber gestartet, nach Ablauf dieser vorgegebenen Zeit sollte die Brauchwasser-Temperatur eingeschwungen sein. Das wird zum Anlaß genommen, die Temperaturabweichung (Sollwert minus Istwert) zu bestimmen. Unterschreitet diese Abweichung eine gewisse Grenze, wird ein Lernschritt ausgeführt. Dabei wird in Abhängigkeit der Größe der Abweichung (des Regelfehlers), in Abhängigkeit des aktuellen Brauchwasser-Durchflusses und in Abhängigkeit der Temperaturdifferenz $\Delta\vartheta$ wird eine besser angepaßte Parabel bestimmt. Die Bestimmung der Parabel orientiert sich zunächst an einer einzelnen verbesserten Pumpenleistung - also einer verbesserten einzelnen Stützstelle - für den Brauchwasser-Durchfluß. Dazu wird der aktuelle Brauchwasser-Durchfluß einer der hier drei Bereichen zugeordnet, die jeweils eine Stützstelle umgeben. Die Bereiche grenzen aneinander, so daß jedem Stützpunkt ein Einzugsfeld zugeordnet werden kann. Dabei ist es vorteilhaft, wenn die Stützstellen jeweils in der Bereichsmitte liegen, so daß die Einzugsgebiete gleichmäßig sind. Die neue Parabelgleichung errechnet sich dann aus der aktuellen neuen Stützstelle mit dem dazugehörigen Durchflußwert und den Stützstellen aus den beiden Nachbarbereichen. Aus dieser neuen Gleichung werden dann drei neue Stützstellen zurückgerechnet, die die geänderte Parabel festlegen. Aus den Differenzen gegenüber den vorhergehenden Stützstellen wird Differenzvektor d(t) gebildet. Dieser Differenzvektor ist bereits erwähnt worden und modifiziert die Ausgabevektoren der Neuronen in der Nähe des Erregungszentrums. Die Lernregel lautet hierbei:

$$w_j(t+1) = w_j(t) + \varepsilon \cdot h_{jz} \cdot d(t).$$

Die Differenzvektor-Lernmethode verändert die Amplituden der einzelnen Stützstellen. Dies wird ersichtlich, wenn die Figuren 5, 6 bzw 7, 8 bzw. 9, 10 in zeitlicher Aufeinanderfolge betrachtet werden. Der jeweils vorgegebene Wert in den Figuren 5, 7, 9 verändert sich dabei durch das Lernverfahren in die Werte der Figuren 6, 8 und 10. Die Figuren 6, 8 und 10 geben dann den vollständigen Inhalt jedes Neurons wieder, damit von ihnen eine Parabel aus Stützstellen angebbar ist. Auch können mehr als drei Stützstellen vorgesehen werden, wenn eine weniger stetige Funktion modelliert werden soll oder wenn eine höhere Genauigkeit gewünscht wird. Anzumerken ist hierbei, daß die Verschiebung der Stützstellen jeweils vertikal ist, d.h. die Ausgabevektoren werden in ihrer Tendenz verschoben. Anders war dies bei dem Zusammenrücken der Neuronen in Richtung auf ein Erregerzentrum. Dies entsprach einem Verändern der Position jedes Neurons. Verschiebt sich also jedes Neuron, so verschiebt es mit sich die jeweilige Funktion. Verschieben sich die Funktionen, so wird es auch erforderlich, die gewundenen Flächenbereiche neu zu bestimmen. Jeder Lernschritt zur Veränderung des Ausgabevektors (der Amplitude der Stützstellen) führt also zu einer Neuanpassung der 3x4-Matrizen, mit denen der gewundene Flächenbereich festgelegt wird. Nach Abschluß eines solchen Lernschrittes wird erneut der Zeitgeber gesetzt, so daß sich eine Abtastzeit ergibt, bevor ein weiterer Lernschritt erfolgt. Liegen die Lernschritte zu dicht aufeinander, so ähneln die Messwerte zu sehr den Vorhergehenden und erlauben keine zielstrebige Neuermittlung der Stützstellen (Singularität). Deshalb wird die Zeitdauer des Zeitgebers stark davon abhängen, wie träge das thermische System ist. Ist es relativ langsam, so wird die Zeitdauer zwischen zwei Lernschritten sehr hoch gewählt. Anhaltspunkt für den Abstand zweier Lernschritte in einem üblichen Heizungssystem sind einige Sekunden bis zu 1 Minute. Es hat sich als günstig für das Einschwingen der Netzparameter herausgestellt, wenn Lernschritte erst dann begonnen werden, wenn sich eine annähernd stationäre Zapfmenge - ein annähernd konstanter Durchfluß des Durchflußgebers 19 - feststellen läßt. Bis ein solcher etwa stationärer Durchfluß erreicht wird, wartet das Lernverfahren ab. Die Wartezeit kann ca. 20sec bis etwa 60sec betragen und wird selbst am Besten auch adaptiv gestaltet. Die Adaption betrifft hierbei die Wartezeit abhängig von der Höhe des Durchflusses selbst; wird eine große Menge entnommen, so kann mit den Lernschritten früher begonnen werden (kleine Wartezeit), wird eine geringe Menge gezapft (kleiner Durchfluß), so sollte eine längere Wartezeit eingelegt werden, bevor das Lernverfahren mit seinen Abtastungen beginnt.

Auch die Abtastungen (die Abtastzeit) zwischen zwei Lernschritten kann variabel gestaltet sein. Hier bietet sich auch die Abhängigkeit von dem Durchfluß an. Werden nur geringe Brauchwasser-Temperaturen verlangt, unterhalb von 50° oder gar unterhalb von 40°C, so kann eine zusätzliche Wartezeit fest vorgegeben sein, bevor die Lernschritte - durchflußabhängig oder durchflußunabhängig - beginnen.

Die grundsätzliche Orientierung der Parabel bleibt jedenfalls bestehen, wobei eine höhere Durchflußmenge auch eine höhere Pumpenleistung der Primärpumpe 9 erfordert. Nachdem sowohl die geförderte Menge im Sekundär-Brauchwasserkreislauf sich mit steigendem Durchfluß erhöht und gleichzeitig die Zeitdauer reduziert wird, die die steigende Fördermenge im Wärmetauscher 7 verbleibt, muß die Primärpumpe 9 stärker als proportional in ihrer Leistung verändert werden, um eine gleichbleibende Brauchwassertemperatur an der Meßstelle 18 zu gewährleisten. Versuche haben gezeigt, daß dies mit einer Parabelform am besten zu erreichen ist. Abhängig vom Wärmetauscher (etwa laminare oder stark turbulente Primärströmung) und abhängig von der Leistungs/Drehzahl-Charakteristik der Primär-Förderpumpe 9 kann es aber auch erforderlich sein, hier eine andere Funktion vorzusehen. Denkbar ist es auch, die Parabel oder die sich gemäß dem vorstehenden ändernde Funktion durch ein Polygon anzunähern, das soviele Stützstellen aufweist, wie es Geradenabschnitte aufweist.

**Patentansprüche**

1. Verfahren zum Aufrechterhalten einer bestimmten - vorgebbaren - Temperatur ($\vartheta_{25}$, $\vartheta_{18}$) von (sekundärseitigem) Brauchwasser, das über einen Wärmetauscher (7) aus einem Primärkreislauf erwärmt wird, bei dem

    (a) eine im Primärkreislauf angeordnete Förderpumpe (9) in ihrer Förderleistung - insbesondere elektrisch getaktet oder frequenzmoduliert - gesteuert wird;

    (b) die Steuerung der Förderpumpe (9) von einem neuronalen Netz (30; 40) ausgeht, das zwei Neuronen-Ebenen (40a, 40b) aufweist, und zwar eine Eingabeebene (40a) und eine Ausgabeebene (40b).

2.  Verfahren nach Anspruch 1, bei dem die Eingabeebene (40a) ein Neuron aufweist, dem die Solltemperatur ($\vartheta_S$) zugeführt wird, welche das dem Wärmetauscher (7) entnommene Brauchwasser aufweisen soll.

3.  Verfahren nach Anspruch 1 bzw. Anspruch 2, bei dem die Eingabeebene (40a) ein bzw. ein weiteres Neuron aufweist, dem eine Temperaturdifferenz ($\Delta\vartheta$) aus primärseitiger Wassertemperatur ($\vartheta_{25}$) des Wärmetauschers (7) und Solltemperatur ($\vartheta_S$) zugeführt wird.

4.  Verfahren nach Anspruch 3, bei dem

    (a) die Solltemperatur ($\vartheta_S$) die Temperatur ($\vartheta_{18}$) ist, die das - sekundärseitig - entnommene Brauchwasser aufweisen soll;

    (b) die Temperaturdifferenz ($\vartheta$) die Differenz aus der Solltemperatur (Merkmal a) und der Isttemperatur ($\vartheta_{25}$) des primärseitigen - in den Wärmetauscher (7) eintretenden - Wassers ist.

5.  Verfahren nach einem der vorhergehenden Ansprüche, bei dem die Eingabeebene (40a) nur zwei Neuronen aufweist.

6.  Verfahren nach einem der vorhergehenden Ansprüche, bei dem die Übertragungsfunktion der Eingabeebene die Identitätsfunktion ist.

7.  Verfahren nach einem der vorhergehenden Ansprüche, bei dem die zweite Neuronenebene (40b) ein zweidimensionales (x,y;i,j) Netz aus Neuronen ($N_{1,1}$ ... $N_{i,j}$ ... $N_{n,n}$; i,j=1...n) ist, wobei jedes Neuron innerhalb der zweiten Neuronenebene (40b) über seine Netzkoordinaten (x,y;i,j) eindeutig festgelegt ist.

8.  Verfahren nach Anspruch 1 bis Anspruch 7, bei dem aus den Übergabewerten - denjenigen Werten, die von der Eingabeebene (40a) an die Ausgabeebene (40b) weitergegeben werden - ein einzelnes Neuron ($N_{i,j}$) der Ausgabeebene (40b) bestimmt wird, welches den Übergabewerten am ehesten entspricht (Erregerzentrum I).

9.  Verfahren nach einem der Ansprüche 1 bis 8, bei dem jedes Neuron der zweiten Ebene (40b) eine Funktion - oder zumindest einen Funktionsabschnitt - ($P_{i,j}$ =f($\Phi$)) speichert und bei Auswahl dieses Neurons ($N_{i,j}$) als Erregerzentrum diese gespeicherte Funktion ($P_{i,j}$) zur Verfügung gestellt wird, um abhängig von der - derzeit "gezapften" - Brauchwassermenge pro Zeiteinheit ($\Phi$) die - derzeit benötigte - Pumpenleistung (P) zu bestimmen.

10.  Verfahren nach einem der Ansprüche 1 bis 7, bei dem ein beliebiger Ort - auch zwischen den Neuronen ($N_{i,j}$) des Netzes (x,y;i,j) der zweiten Ebene (40b) - aus den Übergabewerten der Eingangsebene (40a) zur Ausgabeebene (40b) bestimmt wird (Erregerzentrum II).

11.  Verfahren nach Anspruch 10, bei dem die Abhängigkeit der Pumpenleistung (P) - im Bereich zwischen vier Neuronen, die die Eckpunkte eines Rechteckes oder Quadrates im Neuronennetz der Ausgabeebene (40b) bilden - von einer gewundenen Fläche ($F_{i,j}$) beschrieben wird, die sich bestimmt aus den Funktionen bzw. Funktionsabschnitten ($P_{i,j}$) jedes der Eckpunkt-Neuronen ($N_{i,j}$; $N_{i+1,j}$; $N_{i,j+1}$; $N_{i+1,j+1}$).

12.  Verfahren nach Anspruch 11, bei dem die einem - im Gitter-Zwischenbereich zu liegen kommenden - Erregerzentrum zugehörige Pumpenleistung (P) bestimmt wird, indem das Neuron ($N_{i,j}$) herangezogen wird, dessen Netzkoordinaten (i,j) am geringsten sind und dieses Neuron ($N_{i,j}$) die - die gewundene Fläche festlegenden - Stützstellen bereithält.

13.  Verfahren nach Anspruch 9 oder 11, bei dem jede Funktion bzw. jeder Funktionsabschnitt ($P_{i,j}$) mit einigen - insbesondere drei - Stützstellen in jedem Neuron ($N_{i,j}$) definiert ist.

14.  Verfahren nach Anspruch 13, bei dem die Funktion ($P_{i,j}$) eine Parabel bzw. der Funktionsabschnitt ein Parabelabschnitt ist.

15.  Lernverfahren für das Einstellen und Nachführen von Parametern ($w_j$(t+1), x(t), $\varepsilon$, $h_{jz}$), bei dem

    (a) die Parameter in Neuronen ($N_{i,j}$) einer/der Ausgabeebene (40b) eines neuronalen Netzes (40; 40a, 40b) gespeichert sind, welche - abhängig von Temperaturgrößen (Mess-, Vorgabe- und Differenzgrößen) und gespeicherten Funktionen oder Funktionsabschnitten ($P_{i,j}$) die - die Pumpenleistung ($P=f(\Phi)$) einer Brauchwasser-Primärkreislauf-Förderpumpe (9) bestimmt;

(b) Die Neuronen ($N_{i,j}$) der Ausgabeebene (40b) des neuronalen Netzes (40; 40a, 40b) -nach einem Stabilisieren der Brauchwasser-Abgabetemeratur ($\vartheta_{18}$) auf die Solltemperatur des Brauchwassers ($\vartheta_S$) - zeitdiskret zusammenrücken, wobei der Gitterabstand zwischen den Neuonen ($N_{i,j}$) in der Ausgabeebene (40b) reduziert wird.

16. Lernverfahren nach Anspruch 15, bei dem der Gitterabstand im näheren Umfeld des Erregerzentrums (I oder II) stärker reduziert wird, als bei den außerhalb des näheren Umfeldes angeordneten Neuronen.

17. Lernverfahren nach Anspruch 16, bei dem sich das Ausmaß der Gitterpunktkontraktion nach Maßgabe einer zweidimensionalen Gauss'schen Normalverteilung richtet.

18. Lernverfahren nach Anspruch 15 bis Anspruch 17, bei dem

(a) das Überschreiten eines Schwellenwertes in der Regeldifferenz zwischen Sollwert ($\vartheta_S$) und Meßwert ($\vartheta_{18}$) erfaßt wird;

(b) die Funktionsabschnitte oder Funktion ($P_{i,j}=f(\Phi)$) desjenigen Neurons ($N_{i,j}$) verändert wird, welches aktuell gemäß den Übergabewerten der Eingangsebene (40a) zur Ausgabeebene (40b) ausgewählt ist;

(c) um jede der Stützstellen der Funktion ($P = f(\Phi)$) des aktuellen Neurons ein Einzugsbereich festgelegt wird, wobei alle Einzugsbereiche aller Stützstellen sich zu einem kontinuierlichem Bereich ergänzen;

(d) der aktuelle Einzugsbereich - derjenige, in den der aktuelle Meßwert für den Brauchwasserdurchfluß ($\Phi$) fällt - in Verbindung mit den benachbarten Funktionswerten der gespeicherten Funktion ($P_{i,j}$) die Veränderung (Merkmal b) bewirkt;

(e) die Funktionen oder der Funktionsabschnitte im näheren Umfeld des aktuellen Neurons anhand der Differenz von veränderter aktueller Funktion/Funktionsabschnitt zu bisheriger Funktion/Funktionsabschnitt des aktuellen Neurons amplitudenverändert werden.

19. Lernverfahren nach Anspruch 18, bei dem nach Veränderung der Funktionen bzw. Funktionsabschnitte ($P_{i,j}$) im näheren Umfeld des aktuellen Neurons ($N_{i,j}$) die Anpassung der gewundenen Flächen ($F_{i,j}$) für jeweils einen Zwischenbereich von vier Eckpunkt-Neuronen erfolgt, und zwar basierend auf den bereits veränderten Funktionen bzw. Funktionsabschnitten.

20. Lernverfahren nach einem der Ansprüche 15 bis 19, bei dem

(a) der Zeitabstand der Lernschritte variabel ist, und zwar abhängig von der Durchflußmenge ($\Phi$);

(b) die Wartezeit vor Beginn der Lernschritte so groß ist, daß das System für einen bestimmten Durchfluß ($\Phi_1$) eingeschwungen ist.

21. Lernverfahren nach Anspruch 20, bei dem die Wartezeit verlängert wird, solange, bis eine stationäre Durchflußmenge ($\Phi_1$) erreicht wird.

22. Lernverfahren nach Anspruch 20 oder 21, bei dem die Wartezeit stark verlängert wird, wenn der Sollwert ($\vartheta_S$) der Brauchwassertemperatur ($\vartheta_{18}$) unter 40°C liegt.

Figur 1

EP 0 613 070 A2

Figur 2

Ausgangsgrößen

Gewichtsvektor

output 3d-Vektor

output 3x4-Matrix

Neuron mit Netzkoordinaten $x = 7 \,/\, y = 1$

w1  w2

Neuron $N_{7,1}$

$N_{7,7}$
Ausgabeschicht

$N_{i,j}$

40b

$N_{7,1}$

40a

Eingabeschicht

Eingangsgrößen

Überhöhungstemperatur $\Delta\vartheta$

Warmwassersolltemperatur $\vartheta_S$

$y,j$

$x,i$

40

Figur 3

Oder P
der Pumpe 19

$N_{i,j}$ für $\begin{cases} N_{i,j}; N_{i+1,j}; \\ N_{i+1,j+1}; N_{i,j+1} \end{cases}$

Bereich

$N_{35}$ $N_{16}$

$N_{46}$

E II

x oder $\vartheta_S$

y oder $\Delta\vartheta$

Figur 4

Figur 4a

Figur 5a

Figur 5

Figur 6a

Figur 6

Figur 7

Figur 7a

EP 0 613 070 A2

Figur 8

Figur 8a

EP 0 613 070 A2

Figur 9

Figur 9a

EP 0 613 070 A2

Figur 10a

Figur 10